Europäisches Patentamt

European Patent Office

Office européen des brevets

(11) Veröffentlichungsnummer: **0 490 056 B1**

(12) **EUROPÄISCHE PATENTSCHRIFT**

(45) Veröffentlichungstag der Patentschrift: **04.01.95**

(51) Int. Cl.6: **B29B 7/48**, //B29K7:00

(21) Anmeldenummer: **91117696.4**

(22) Anmeldetag: **17.10.91**

(54) **Verfahren und Vorrichtung zur einstufigen, kontinuierlichen Herstellung einer Kautschukgrund- und -fertigmischung für Fahrzeugreifen, Antriebsriemen, Transportbänder sowie für technische Gummiartikel in nur einer Mischung.**

(30) Priorität: **14.12.90 DE 4039943**

(43) Veröffentlichungstag der Anmeldung:
**17.06.92 Patentblatt 92/25**

(45) Bekanntmachung des Hinweises auf die Patenterteilung:
**04.01.95 Patentblatt 95/01**

(84) Benannte Vertragsstaaten:
**AT DE FR GB IT SE**

(56) Entgegenhaltungen:
**DE-A- 1 454 745**
**DE-A- 1 604 396**
**DE-A- 1 679 878**
**US-A- 3 968 955**

(73) Patentinhaber: **HERMANN BERSTORFF Maschinenbau GmbH**
**Hannoversche Strasse 149**
**D-30627 Hannover (Kleefeld) (DE)**

(72) Erfinder: **Brinkmann, Heinz**
**Fichtenweg 8**
**W-3257 Springe 2 (DE)**
Erfinder: **Capelle, Gerd, Dipl.-Ing.**
**Hainhäuser Weg 53**
**W-3012 Langenhagen 6 (DE)**

EP 0 490 056 B1

## Beschreibung

Die Erfindung betrifft ein Verfahren sowie eine Vorrichtung zur einstufigen, kontinuierlichen Herstellung von Kautschukgrund- und -fertigmischungen für Fahrzeugreifen, Antriebsriemen, Transportbänder sowie technische Gummiartikel gemäß dem Oberbegriff der Ansprüche 1 und 2.

Kautschukmischungen, die den Ausgangswerkstoff eines jeden Elastomerproduktes wie Reifen, Förderbänder, Dichtprofile, Federbälge usw. darstellen, sind komplexe, reaktive Mehrkomponentensysteme, die im allgemeinen aus Kautschuk, Weichmacheröl zum Strecken des Polymers und zum Verbessern der Verarbeitungseigenschaften, Chemikalien zum Erzielen spezieller Eigenschaften wie z.B. Flammenschutz, Lichtschutz, Haftmittel, verstärkende Füllstoffe (z.B. Ruß, Kieselsäure oder Fasern zum Erhöhen der mechanischen Festigkeit und Vernetzungssystemen aus Vernetzungsmittel, Aktivatoren, Beschleunigern und Verzögerern bestehen.

Aufgrund der unterschiedlichen Zustandsformen (Ballen, Granulat, Pulver, Flüssigkeit), der extrem unterschiedlichen Viskositäten und der stark unterschiedlichen Gewichtsanteile (z. B. 1 Teil Schwefel auf 100 Teile Kautschuk) stellt die Vermischung dieser einzelnen Stoffkomponenten eine verfahrens- und maschinentechnisch äußerst schwierige Aufgabe dar. Zudem kommt dem Prozeß der Mischungsherstellung noch eine besondere Bedeutung zu, da die physikalischen und chemischen Eigenschaften eines elastomeren Fertigerzeugnisses nicht nur von der Rezeptur der Kautschukmischung, sondern auch von der Mischtechnik abhängig sind. So hat z.B. die Reihenfolge der Zugabe von Kautschuk, Ruß und Weichmacher einen erheblichen Einfluß auf die Rußdispersion und damit auf die mechanische Festigkeit des Fertigteils.

Nach dem gegenwärtigen Stand der Technik werden Kautschukmischungen nahezu ausschließlich auf als Kneter bezeichneten Innenmischern hergestellt.

Eine Innenmischeranlage besteht aus Dosier-, Verwiege- und Transportsystem, dem Innenmischer, einem Extruder oder Walzwerk zur Aufbereitung der Innenmischercharge zu Kautschukfellen, einer Kühlanlage für die Felle und einer Ablege- oder Schneidvorrichtung.

Der eigentliche Mischprozeß erfolgt in einer Kammer mit zwei verschließbaren Öffnungen und zwei parallel angeordneten, mit Knetelementen bestückten und gegenläufig drehenden Rotoren. Die Wände der Mischkammer, die Rotoren, der Einfüllstempel und der Ausstoßklappsattel werden mit zirkulierender Flüssigkeit temperiert. Die Stoffkomponenten werden bei hochgefahrenem Stempel über den Einfüllschacht zugeführt während Flüssigkeiten über Düsen direkt in die Mischkammer einspritzbar sind. Die Kanten der rotierenden Knetschaufeln bilden Spalte, in denen das Material geschert und dispergiert wird. Die Knetelemente sind so gestaltet, daß das Mischgut in Längs- und Umfangsrichtung zwangsgefördert wird. Die aus dem laminaren Strömungsfeld resultierende Stromteilung und Umschichtung bewirkt einen distributiven Mischeffekt. Am Ende eines Zyklus wird die Mischkammer durch Abschwenken des Klappsattels geöffnet und das Mischstück wird durch die Förderwirkung der Rotoren ausgeworfen.

Die für das Erreichen einer homogenen Mischung erforderliche Verweil- oder Zykluszeit wird empirisch für jede Rezeptur ermittelt. Steuerungstechnisch wird der Prozeß beendet, wenn vorgegebene Werte der Zeit, des Rotordrehmomentes, der Rotorumdrehungen, der Mischguttemperatur oder des Energieeintrages erreicht sind.

Die über die Rotoren eingetragene Energie wird zu einem großen Teil in der hochviskosen Polymermasse dissipiert. Aufgrund des wärmetechnisch ungünstigen Oberflächen/Volumen-Verhältnisses der Mischkammer kann die Dissipationswärme nur begrenzt abgeführt werden. In dem daraus resultierenden Temperaturanstieg des Mischgutes liegt einer der gravierendsten Nachteile des Innenmischprozesses begründet: Um ein vorzeitiges Starten der temperaturabhängigen Vernetzungsreaktion zu vermeiden, muß eine Kautschukmischung mit einem Innenmischer im allgemeinen in mehreren Stufen hergestellt werden. In der ersten Stufe werden alle nicht-reaktiven Bestandteile gemischt. In Fällen hoher Füllstoffkonzentrationen und thermischer Instabilität der Polymere können hierfür bereits mehrere Zyklen erforderlich sein.

Die als Grundmischung bezeichnete Vormischung wird nach Auswurf aus dem Innenmischer von ca. 100 ° C bis 160 ° C auf 20 ° C bis 40 ° C abge- kühlt und anschließend der Fertigmischstufe zugeführt. Dort werden ebenfalls mit einem Innenmischer die reaktiven Vernetzungschemikalien in die Grundmischung eingemischt, wobei eine Temperatur von ca. 80 ° C bis 120 ° C nicht überschritten werden darf. Die nach dieser Stufe alle Bestandteile enthaltende Fertigmischung wird wiederum auf 20 ° C bis 40 ° C abgekühlt. In vielen Fällen wird die Fertigmischung vor der Weiterverarbeitung noch 20 bis 40 Stunden gelagert, um während dieser Lagerzeit die Mischgüte durch diffusiven Stofftransport auf das erforderliche Niveau anzuheben.

Die Herstellung von Kautschukmischungen mit Innenmischern ist mit zwei erheblichen Nachteilen behaftet. Zum einen kann ein Innenmischer prinzipiell nur diskontinuierlich betrieben werden. Daraus ergibt sich eine Unterbrechung im kontinuierlichen Fertigungsablauf mit organisatorischen und logistischen Problemen. Ferner besteht die Gefahr von Qualitätsschwankungen, da aufgrund des intermittierenden Betriebes bei jedem Zyklus Anfahreffekte auftreten.

Zweitens kann die Temperatur des Mischgutes nur in engen Grenzen beeinflußt werden, weshalb der Mischprozeß mehrstufig durchgeführt und nach jeder Mischstufe eine Umformung und Abkühlung erfolgen muß. Aus der Mehrstufigkeit ergeben sich eine Verlängerung der Mischzeit, ein sehr großer Energiebedarf durch das wiederholte Plastifizieren und Abkühlen der Mischung sowie die Notwendigkeit, Lager- und Transportkapazitäten für die Zwischenmischungen bereit zu stellen.

Aufgrund dieser Nachteile des Innenmischers ist bereits in den 60er Jahren mit der Entwicklung alternativer Mischaggregate begonnen worden. So wurde beispielsweise der aus der DE-AS 11 42 839 bekannte Transfermix-Extruder auf seine Eignung als Kautschukmischer untersucht. Dabei handelt es sich um einen Einschneckenextruder, bei dem nicht nur der rotierende Dorn (Schnecke), sondern auch der stehende Zylinder über Fördergänge verfügt. Das Material wird mehrfach von den Fördergängen der Schnecke in die des Zylinders und wieder zurück transferiert, wodurch eine gute Mischwirkung erzielt wird. Das Zusammenfassen der Herstellung von Kautschukgrund- und -fertigmischungen in einem kontinuierlichen Verfahrensablauf und dessen Bewältigung in nur einer Mischvorrichtung war jedoch aus thermischen Gründen nicht möglich.

Ebenfalls nur zum Fertigmischen geeignet ist eine aus der DE-AS 16 79 829 bekannte Zwei-Wellen-Maschine. Ein Farrel-Continuous-Mixer besteht im wesentlichen aus zwei gegenläufig drehenden und beidseitig gelagerten Wellen, die im Einzugsbereich wie Förderschnecken und im Austragsbereich wie Knetschaufeln gestaltet sind. Die Verweilzeit kann über die Drehzahl der Wellen und eine Drossel im Austrittsquerschnitt beeinflußt werden.

Außerdem ist eine von der Firma Buss AG entwickelte und als Ko-Kneter bezeichnete Einwellenmaschine zur Herstellung von Kautschukmischungen bekannt geworden. In ihr sind einem Stiftextruder vergleichbar die Flanken der Schnecken im Ko-Kneter über den Umfang mehrfach durchbrochen. In diese Durchbrüche greifen während der Rotation im Zylinder befestigte Knetzähne ein. Zur Erhöhung der Längsmischwirkung führt die Welle bei jeder Umdrehung eine oszillierende Längsbewegung aus (Kautschuk und Gummi, Kunststoffe, 38. Jahrgang, Nr. 2/85, Seiten 116 - 121).

Letztlich ist aus der europäischen Patentschrift 0 277 558 ein Verfahren und eine Vorrichtung zur Herstellung von Kautschukmischungen bekannt, bei der zwei Innenmischer in Serie angeordnet sind. Der erste Innenmischer besorgt die Grundmischung des Kautschuks, während der zweite Innenmischer die Aufgabe der Fertigmischung übernimmt. Der zweite Innenmischer befindet sich direkt unter dem Mischer für die Kautschukgrundmischung, so daß diese chargenweise direkt in den Fertigmischer geleitet und dort weiterverarbeitet werden kann.

Zwar wird mit dieser Verfahrensweise das sehr kostenaufwendige Abkühlen und Rückerwärmen durch das bisherige Zwischenlagern der Grundmischung vermieden, nachteilig ist aber wie bei allen anderen Verfahrensweisen und Vorrichtungen gemäß dem Stand der Technik, daß eine kontinuierliche Herstellung von Kautschukfertigmischungen nicht möglich ist. Zudem ist die Kühlfähigkeit des zweiten als Fertigmischer arbeitenden Innenmischers aufgrund seines vergleichsweise schlechten Verhältnisses von kühlbarer Oberfläche zur im Mischer befindlichen Mischungsmenge nach wie vor schlecht.

Von den Alternativen zum Innenmischer hat sich daher in der betrieblichen Praxis aus überwiegend technischen Gründen, wie ungenügende Mischleistung oder thermische Probleme, keine durchsetzen können. Der Stand der Technik zur Herstellung von Kautschukmischungen ist somit nach wie vor der auf der Basis von Teigknetmaschinen entwickelte Innenmischer.

Aus der US-PS 3,968,955 ist ein kühlbarer Doppelschneckenextruder mit einer Kühlzone bekannt. In diesem Extruder wird jedoch keine Fertigmischung unter Einfügung der reaktiven und nicht-reaktiven Mischungszusätze durchgeführt. Bei der Bildung des Oberbegriffes des Vorrichtungsanspruchs 2 wird von dieser Schrift ausgegangen.

Die Aufgabe der Erfindung besteht daher darin, ein Verfahren und eine Vorrichtung vorzustellen, mit denen von Rohkautschuk ausgehend in einem Arbeitsgang kontinuierlich eine Kautschukfertigmischung wirtschaftlich herstellbar ist, ohne daß der Kautschuk zur Abkühlung und zum Diffusionsstoffaustausch zwischenzulagern und abzukühlen ist und bei denen es zu keiner Vulkanisierung des Kautschuks in der Mischvorrichtung kommt.

Die Lösung dieser Aufgabe ergibt sich aus den Merkmalen der Ansprüche 1 und 2. Weiterbildungen und Ausgestaltungen der Erfindung sind den Unteransprüchen entnehmbar.

Mit dem durch die Erfindung zur Verfügung gestellten Herstellungsverfahren sowie mit der erfindungsgemäßen Herstellungsvorrichtung lassen sich gegenüber den bisher hauptsächlich verwendeten Innenmischern erhebliche Vorteile erzielen. Neben der Verbesserung der Qualität des kontinuierlich produzierbaren Fertigmischung ergeben sich deutliche Einsparungen in den Herstellungskosten, was anhand eines Beispiels veranschaulicht werden kann:

Die heute üblichen Innenmischer werden zumeist in Größen von 50 bis 500 l Mischkammervolumen gebaut. Eine in allen Teilbereichen der kautschukverarbeitenden Industrie vielfach verwendete Maschinengröße ist die der 350 l-Mischer, für die im folgenden eine vergleichende Wirtschaftlichkeitsbetrachtung durchgeführt wird.

Die Kosten für die Herstellung von 1 kg vernetzungsfähiger Kautschukmischungen setzten sich durchschnittlich wie folgt zusammen:

| Materialkosten | 85 % |
|---|---|
| Lohnabhängige Fertigungskosten | 8 % |
| Maschinenabhängige Fertigungskosten | 7 % |
| | 100 % |

Für die Herstellungskosten ergibt sich somit ein maximales Einsparungspotential von 15 %.

In Tabelle 1 sind die einzelnen Positionen, aus denen sich die Herstellungskosten zusammensetzen, für das konventionelle Verfahren mit Innenmischern und für das neu entwickelte Verfahren zusammengestellt. Die Kosten für den Innenmischer-Prozeß stellen gesicherte Erfahrungswerte der kautschukverarbeitenden Industrie dar. Die Kosten für die Neuentwicklung wurden vom Patentanmelder konservativ geschätzt auf der Basis der langjährigen Erfahrungen mit Extrusionsanlagen. Dieser Kostenvergleich enthält im einzelnen folgende Annahmen bzw. Erfahrungswerte:

| | Innenmischer | | Verfahren gemäß der Patentanmeldung |
| | Grund-mischung DM/t | Fertig-mischung DM/t | DM/t |
|---|---|---|---|
| Lohnabhängige Fertigungs-kosten | 33,70 | 33,70 | 22,50 |
| Maschinenabhängige Fertigungskosten: | | | |
| Elektr. Energie | 37,20 | 13,70 | 59,20 |
| Kühlung | 3,70 | 3,30 | 5,-- |
| Wartung | 25,80 | 22,90 | |
| Sachfixkosten | 51,90 | 51,90 | 42,40 |
| Kosten für Nebentätig-keiten: | | | |
| Chemikalien abwiegen und kontrollieren | 26,10 | 12,40 | 26,10 |
| Transport und Lager | 23,90 | 24,40 | -,-- |
| Mischungsfreigabe | -,-- | 27,50 | -,-- |
| Abfall | 1,-- | 1,-- | 1,-- |
| Gesamtkosten | 203,30 | 190,80 | 156,20 |
| | 394,10 | | ======== |
| | ======== | | |

Tabelle 1: Kostenanteile für die Herstellung von Kautschukmischungen

Mit Innenmischern der Größe 350 l können bei praxisüblichen Werten von Mischzeit, Füllgrad und Rüstzeit im 3-Schichtbetrieb etwa 2.300 kg/h produziert werden. Auf diesen Durchsatz werden die Kostenanteile bezogen.

Bei der Produktion mit Innenmischern wird die Mischung in der Regel in 2 Stufen hergestellt. In der ersten Stufe wird die Grundmischung und in der zweiten Stufe die Fertigmischung produziert. Dazu sind 2 komplette Maschinendurchläufe erforderlich, die mit jeweils 3 Mann Bedienungspersonal betrieben werden. Der Erfindungsgegenstand erfordert dagegen nur 2 Mann Bedienungspersonal.

Der Berechnung der Sachfixkosten liegen ein Abschreibungszeitraum von 15 Jahren und ein Zinssatz von 6 % zugrunde. Die Investitionssumme setzt sich zusammen aus den Kosten für die Dosier- und Beschickeinrichtungen, das Mischaggregat einschließlich Antrieb und Steuerung und für eine Batchoff-Anlage. Im Fall einer Erstinstallation kommen noch Kosten für eine Vorzerkleinerung des im allgemeinen in Ballenform gelieferten Rohkautschuks dazu sowie ein Sicherheitszuschlag von 20 % für zum gegenwärtigen Zeitpunkt nicht abschätzbare Zusatzkosten.

Für die Installation einer Laboranlage wird der ungünstige Fall angenommen, daß einige Mischungsbestandteile aufgrund zu geringer Konzentrationen einzeln nicht kontinuierlich zudosiert werden können. Zur Herstellung eines Vorgemisches dieser Mischungsbestandteile werden Kosten in der Position "Chemikalien abwiegen und kontrollieren" in der für den Innenmischer-Prozeß üblichen Größenordnung angesetzt. Die Kosten für Transport, Lager und Mischungsfreigabe entfallen dagegen, da die mit der vorgeschlagenen Vorrichtung hergestellte Mischung direkt zum Endprodukt weiterverarbeitbar ist.

Aus dieser Kostenbetrachtung, die bewußt mit ungünstigen Annahmen durchgeführt wurde, ergibt sich eine Verringerung der Produktionskosten von 60,4 % für das neue Verfahren. 1988 wurden in Europa insgesamt 2,83 Mio t Kautschukmischungen mit einem Durchschnittspreis von 8.000,-- DM/t hergestellt. Bei einem Anteil von 15 % Herstellungskosten ist mit der Neuentwicklung unter diesen Rahmenbedingungen eine Einsparung von DM 2.051.184.000,-- allein für die europäische Kautschukindustrie möglich. Dies bedeutet eine erhebliche Verbesserung der Wettbewerbsfähigkeit bei der Nutzung des hier vorgeschlagenen Erfindungsgegenstandes.

Aus der kontinuierlichen Betriebsweise der gemäß einer nach dem beanspruchten Verfahren betriebenen Herstellungsvorrichtung ergeben sich nicht nur wirtschaftliche, sondern auch technische Vorteile. Bei den heute üblichen Innenmischern treten in Folge des intermittierenden Betriebes bei jedem Mischzyklus thermische Anfahreffekte auf; der Prozeß ist nur quasistationär. In einem kontinuierlichen Prozeß, wie er hier vorgeschlagen wird, ist die Gefahr von Qualitätsschwankungen um ein vielfaches geringer.

Die Geometrie eines Innenmischers ist nicht bzw. nur mit unverhältnismäßig hohem Aufwand veränderbar. Durch den modularen Aufbau der beanspruchten Herstellungsvorrichtung kann die Geometrie der Misch- und Förderelemente optimal auf die herzustellende Kautschukmischung abgestimmt werden, woraus eine optimale Mischgüte resultiert. Aufgrund der sehr guten Mischgüte und deren zeitlicher Konstanz können die kostenintensiven Freigabeprüfungen (vergleiche Tabelle 1) entfallen. Ferner ist es bei vielen Kautschukmischungen nicht mehr erforderlich, diese zum Zweck diffusiver Ausgleichsvorgänge zwischenzulagern. Unmittelbar im Anschluß an den Mischprozeß kann das Material ohne erneutes Plastifizieren zum Halbzeug oder Endprodukt weiterverarbeitet werden.

Die Erfindung läßt sich anhand von Ausführungsbeispielen erläutern. Dazu zeigt die Zeichnung in

Fig. 1 einen Längsschnitt durch einen Doppelschneckenextruder mit Hauptverfahrenszonen A und B für die kontinuierliche Herstellung der Kautschukgrund- und und -fertigmischung in einem Arbeitsgang,

Fig. 2 einen Längsschnitt durch zwei Doppelschneckenextruder D, E, in denen die Kautschukgrund- und Fertigmischung getrennt, aber kontinuierlich herstellbar sind,

Fig. 3 einen Längsschnitt durch einen Doppelschneckenextruder, bei dem im Extrudergehäuse zwei unabhängig voneinander antreibbare Schneckenpaare angeordnet sind, und

Fig. 4 einen Querschnitt ZZ durch das Extrudergehäuse gemäß Fig. 1.

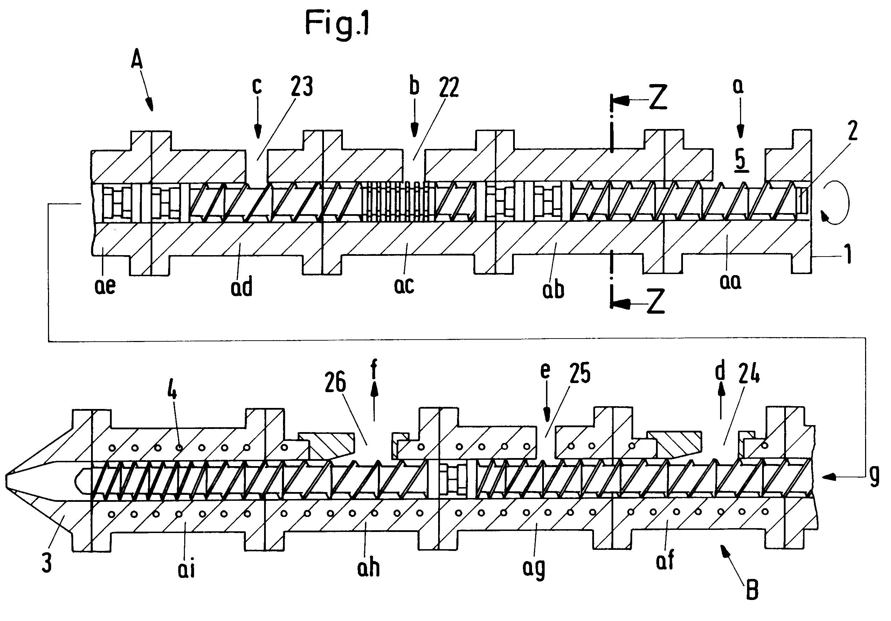

Das erfindungsgemäße Verfahren läßt sich beispielsweise auf einer Vorrichtung gemäß Fig. 1 durchführen, bei der in ihrem Aufbau von einem Doppelschneckenextruder ausgegangen wird. Das Extrudergehäuse 1 ist aus einer Reihe von miteinander verbundenen Gehäuseschüssen aa bis ai aufgebaut und verfügt über eine Einfüllöffnung 5 für den Rohkautschuk, einer Vielzahl von weiteren Einfüll- und Entgasungsöffnungen 22 bis 26 sowie an seinem stromabwärtigen Ende über eine Extruderdüse 3, durch die die Kautschukfertigmischung den Extruder verläßt.

In dem Extrudergehäuse 1 rotieren zwei miteinander kämmende Extruderschnecken 2 (Fig. 4), die entsprechend ihren in den verschiedenen Gehäuseabschnitten unterschiedlichen Aufgaben über untereinander gleiche, aber in Förderrichtung verschiedene Schneckengeometrien aufweisen (z.B. Knet-, Scher-, Misch-, Drossel-, Fördergeometrien).

Zur Verdeutlichung der Funktionsweise eines solchen Extruders soll im Folgenden die Herstellung einer Kautschukfertigmischung beschrieben werden.

5

Der Extruder ist in zwei Hauptverfahrenszonen A, B aufgeteilt, in denen die Herstellung der Kautschukgrundmischung (Zone A) und die Herstellung der Kautschukfertigmischung (Zone B) kontinuierlich erfolgen. Dazu wird durch die Einfüllöffnung 5 kontinuierelich Rohkautschuk a in den Extruder eingespeist. Die in diesem Extruderbereich förderwirksam ausgebildeten Extruderschnecken 2 erfassen den Rohkautschuk und bauen einen Förderdruck auf. Im Bereich der Gehäuseschüsse ab, ac wird der Rohkautschuk plastifiziert und homogenisiert und mit Chemikalien sowie einem Weichmacher b versehen, die durch die Gehäuseöffnung 22 in den Extruder eingespeist werden.

Diese Zusätze werden anschließend in den Rohkautschuk eingemischt und zu einer homogenen Mischung aufbereitet.

Als weitere, nicht-reaktive Mischungskomponente wird anschließend durch die Gehäuseöffnung 23 im Gehäuseschuß ad beispeilsweise Ruß oder Talkum c in den Exruder eingefüllt und durch die Extruderschnecken mit dem Extrudat zu einer homogenen Kautschukmischung verarbeitet.

Innerhalb dieser Hauptverarbeitungzone A des Extruders hat sich die Extrudertemperatur von ca. 25 ° C des Rohkautschuk auf 150 ° C bis 160 ° C im Extruderabschnitt ae erhöht. Aufgrund der Verfahrensweise, daß in dieser Zone A des Extruders nur die nicht-reaktiven Mischungskomponenten in den Extruder eingespeist werden sowie der Verwendung eines selbstreinigungsfähigen Zweischneckenextruders, kommt es hier weder zu Vulkanisationserscheinungen noch zu Ablagerungen von Extrudat.

In der Hauptverfahrenszone B wird das Extrudat beginnend mit dem Gehäuseschuß af auf eine Temperatur im Bereich von 100 ° C bis 120 ° C durch eine Kühlvorrichtung für das Extrudergehäuse abgekühlt. Diese Temperaturreduzierung ist notwendig, da in dieser Zone B des Extruders die Kautschukfertigmischung durch Einmischen der reaktiven Mischungsbestandteile hergestellt wird. Eine Überschreitung dieses Temperaturbereiches würde eine ungewünschte vorzeitige Vulkanisation der Kautschukmischung zur Folge haben.

Die Kühlung des Extrudates erfolgt in diesem Ausführungsbeispiel durch ein flüssiges Kühlmedium, wie beispielsweise Wasser, das durch Bohrungen 4 im Extrudergehäuse 1 geleitet wird. Ein an den Extruder angeschlossener, aber nicht dargestellter Wärmetauscher besorgt die Abfuhr der überschüssigen Wärmemenge aus der Kühlflüssigkeit.

Abweichend von diesem Ausführungsbeispiel kann die Kühlung des Extrudergehäuses aber auch durch um die Gehäuseaußenwand gelegte Kühlkanäle erfolgen, wenngleich auch eine Kühlung über die Extruderschnecken denkbar ist. Zudem kann in Abhängigkeit von der abzuführenden Wärmemenge auch eine andere Warmetauscherflüssigkeit verwendet werden, die beispielsweise auch bei Vorlauftemperaturen unter 0 ° C noch fließfähig ist.

Die in die Hauptverfahrenszone B gelangte Kautschukgrundmischung g wird demnach im Gehäuseschuß af gekühlt und gemäß Fig. 1 über eine Entgasungsöffnung 24 von gasförmigen Extrudatbestandteilen d befreit. Im Gehäuseschuß ag werden der Kautschukmischung anschließend über die Einspeiseöffnung 25 die reaktiven Mischungsbestandteile f, wie beispielsweise Schwefel und Reaktionsbeschleuniger, zugeführt. Anschließend wird das Extrudat unter ständiger Kühlung mit diesen Zusätzen vermischt und zu einer homogenen Kautschukmischung verarbeitet. In dem durch den Gehäuseschuß ah gebildeten Extruderbereich wird das Extrudat noch einmal von seinen flüchtigen Bestandteilen f über die Gehäuseöffnung 26 entgast, um schließlich im Bereich des Gehäuseschusses ai durch die Extruderschnecken 2 auf den notwendigen Werkzeugdruck gebracht zu werden. Das Extrudat verläßt den Zweischneckenextruder schließlich über die Extrusionsdüse 3 als Kautschukfertigmischung, die derart gut homogenisiert ist, daß keine weitere Zwischenlagerung für den bisher üblichen diffusen Stoffaustausch mehr notwendig ist und daher direkt zur kontinuierlichen Weiterverarbeitung abtransportierbar ist..

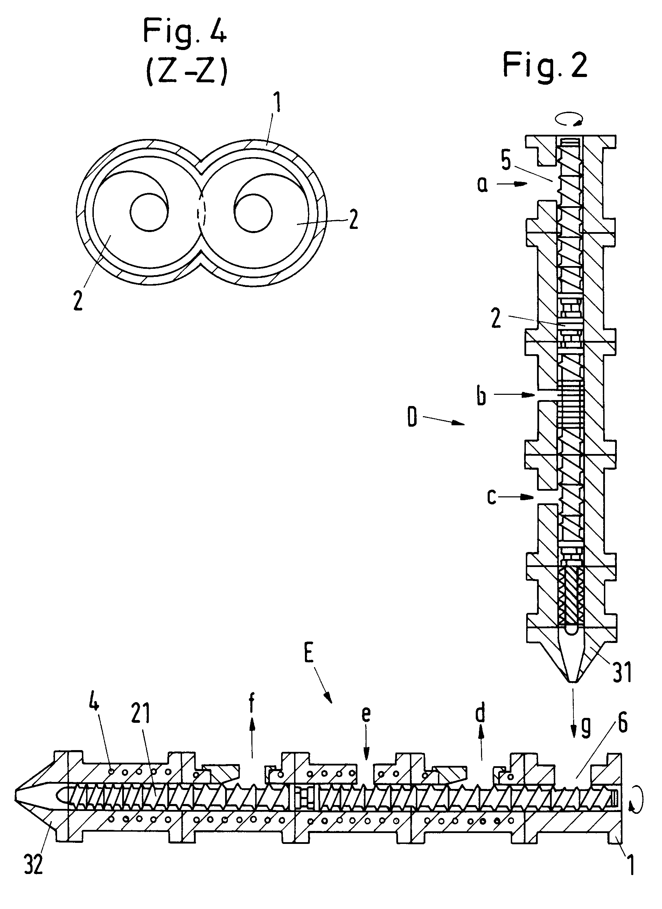

Eine Variante der erfindungsgemäßen Vorrichtung ist in Fig. 2 dargestellt. Hier wird die Grundmischung in einem ersten Zweischneckenextruder D und die Fertigmischung in einem zweiten Zweischneckenextruder E hergestellt. Die Extruder D, E sind vergleichsweise aufgebaut wie der Extruder gemäß Fig. 1, jedoch ist die Hauptverfahrenszone A im Extruder D und die Hauptverfahrenszone B im Extruder E realisiert. Die Zuführung der Mischungskomponenten sowie die Entgasung des Extrudates erfolgt an den gleichen Gehäuseöffnungen wie im Extruder gemäß Fig. 1 und unter den gleichen thermischen Bedingungen. Die von dem Extruder D hergestellte Kautschukgrundmischung g wird direkt in die Einfüllöffnung 6 für die Grundmischung in den Extruder E eingespeist und dort anschließend zur Kautschukfertigmischung weiterverarbeitet.

Auch in dieser Ausführungsform der beanspruchten Vorrichtung braucht die Grundmischung gegenüber dem Stand der Technik nicht zum Abkühlen zwischengelagert und anschließend in einer zweiten Mischvorrichtung auf das für die Einmischung der reaktiven Mischungskomponenten erforderliche Temperaturniveau gebracht zu werden.

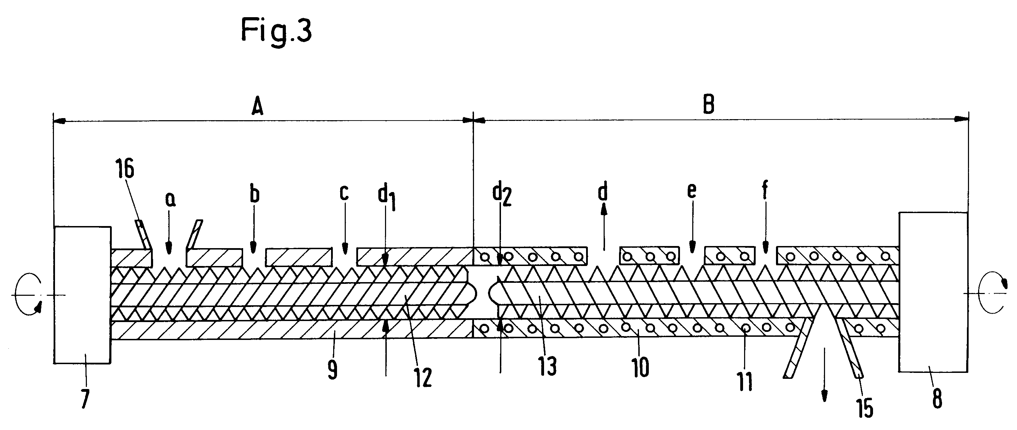

In einer weiteren Variante wird die Vorrichtung zur Durchführung des beanspruchten Verfahrens durch einen Doppelschneckenextruder gemäß Fig. 3 gebildet. Dieser Extruder verfügt über zwei Schneckenpaare 12, 13, die von Antriebseinheiten 7, 8 an den gegenüberliegenden Enden des Extrudergehäuses 9, 10 angetrieben werden. Das Extrudergehäuse läßt sich auch hier in zwei Hauptverfahrenszonen A, B aufteilen, die durch die Länge der Extruderschnecken und/oder durch die mit oder ohne Kühlkanälen 11 versehene Extrudergehäuseabschnitte bestimmbar sind, wobei die Schnecken 13 der Zone B einen größeren Durchmesser hat als die Schnecken 12 der Zone A und bei dem der Innendurchmesser der Gehäusebereiche 9, 10 im gleichen oder doch ähnlichem Verhältnis zueinander ausgebildet sind.

Der Rohkautschuk a wird über eine Einfüllöffnung 16 in den Extruder eingefüllt, wo er im Bereich der Hauptverfahrenszone A homogenisiert und plastifiziert und mit den zur Herstellung der Kautschukgrundmischung notwendigen nicht-reaktiven Mischungskomponenten b, c, versehen wird. In der Verfahrenszone B wird das Extrudat entgast (d, f) und mit den reaktiven Mischungsbestandteilen e versehen. Diese werden hier unter ständiger Kühlung in die Grundmischung eingemischt und mit dieser bei einer Temperatur von 100 ° C bis 120 ° C zu einer homogenen Fertigmischung verarbeitet. Schließlich kann die Fertigmischung durch die Extruderauslaßöffnung 15 die Mischvorrichtung verlassen.

Die mit dem Verfahren gemäß Anspruch 1 auf einer Vorrichtung gemäß Fig. 1 im Labormaßstab gefertigte Kautschukmischung war trotz zuvor gehegter Skepsis hervorragend. Dies war um so überraschender, weil die Fachwelt auf diesem Gebiet der Technik seit Jahrzehnten mit den Nachteilen der Innenmischer belastet war und eine Verwendung von Doppelschneckenextrudern zur kontinuierlichen Herstellung von Kautschukfertigmischungen bisher nicht diskutiert wurde.

Anhand von Versuchsbeispielen kann die erzielte Fertigmischungsgüte beurteilt werden.

| Rezeptur A (PKW-Lauffläche) | |
|---|---|
| Mischungskomponente | Gewichtsanteil % |
| Kautschuk SBR 1712 | 58,0 |
| Ruß N 339 | 31,6 |
| Aromatisches Öl | 6,3 |
| Alterungsschutzmittel IPPD | 0,6 |
| Stearinsäure | 0,8 |
| Zinkoxid | 1,3 |
| Schwefel | 0,6 |
| Beschleuniger VDM/C | 0,5 |
| Beschleuniger VD/C | 0,3 |
| | 100,0 |

Der in diesem Mischungsversuch eingesetzte Kautschuk hatte eine Speisetemperatur von 25 ° C und die Temperatur des Extrudates im Extruderabschnitt ae betrug 160 ° C. Vor der Einlaßöffnung 25 für die reaktiven Mischungskomponenten wurde eine Entrudattemperatur von 105 ° C gemessen, die entlang der gesamten Hauptverfahrenszone mit Abweichungen von ± 5 ° C eingehalten werden konnten. Die Temperatur des Extrudates kurz vor der Extruderdüse ließ sich mit 115 ° C ermitteln. Bei einem Schneckendurchmesser von 90 mm betrug die Verfahrenszone A = 18 Schneckendurchmesser und die Verfahrenszone B ebenfalls = 18 Schneckendurchmesser. Mit der beschriebenen Vorrichtung ließen sich ca. 500 - 600 kg fertigmischung pro Stunde herstellen. Die Fertigmischung war von sehr guter Homogenität und wies im Vergleich zu auf Innenmischern produzierten Mischungen einen wesentlich besseren Rußdispersionsgrad auf. Auch die Streuung der Rheometerkurven zur Untersuchung des Vulkanisationsverhaltens der Mischungen zeigte im Vergleich deutlich bessere Ergebnisse.

In einem Versuch zur Herstellung einer Fertigmischung für LKW-Laufflächen gemäß Rezeptur B ließen sich bei gleichen Extruderabmessungen und Temperaturniveaus ca. 500 kg Fertigmischung pro Stunde produzieren. Prinzipiell wurden ähnliche Vergleichsresultate erzielt.

| Rezeptur B (LKW-Lauffläche) | |
|---|---|
| Mischungskomponente | Gewichtsanteil % |
| Naturkautschuk RSS3 | 60,5 |
| Ruß N 220 | 30,2 |
| Aromatisches Öl | 1,8 |
| Alterungsschutzmittel IPPD | 0,6 |
| Alterungsschutzmittel TMQ | 0,6 |
| Lichtschutzwachs | 0,9 |
| Stearinsäure | 1,8 |
| Zinkoxid | 1,8 |
| Beschleuniger MBS | 0,9 |
| Schwefel | 0,9 |
| | 100,0 |

In einem dritten Versuch konnte Fertigmischung für automotive Profile gemäß der Rezeptur C nach dem erfindungsgemäßen Verfahren hergestellt werden. Auch hier wurden die Temperaturen auf dem vorgenannten Niveau gehalten und 400 kg pro Stunde produziert. Die Qualität der Fertigmischung war auch in diesem Versuch ausgezeichnet.

| Rezeptur C (Automotive Profile) | |
|---|---|
| Mischungskomponente | Gewichtsanteil % |
| Kautschuk EPDM | 23,0 |
| Zinkoxid | 1,2 |
| Stearinsäure | 0,2 |
| Ruß N 550 | 29,0 |
| Kreide | 18,7 |
| Naphtenisches Öl | 26,5 |
| Beschleuniger TP/S | 0,7 |
| Beschleuniger TMTD | 0,3 |
| Beschleuniger MBT | 0,2 |
| Schwefel | 0,2 |
| | 100,0 |

**Patentansprüche**

1. Verfahren zur einstufigen, kontinuierlichen Herstellung einer Kautschukgrund- und fertigmischung für Fahrzeugreifen, Antriebsriemen, Transportbänder sowie für technische Gummiartikel,
   **dadurch gekennzeichnet,**
   daß Rohkautschuk (a) in einem Doppelschneckenextruder eingefüllt und dort plastifiziert und homogenisiert wird,
   daß anschließend die zur Herstellung der Grundmischung (g) notwendigen nicht-reaktiven Mischungszusätze in vorgewählten Abständen entlag des Extruders eingefüllt und bei Temperaturen von 100 ° C bis 160 ° C mit dem Rohkautschuk (a) vermischt und homogenisiert werden,
   daß diese Grundmischung (g) anschließend in diesem Extruder auf eine Temperatur im Bereich von 100 ° C bis 120 ° C abgekühlt wird,
   daß die auf dieser Temperatur gehaltene Grundmischung (g) in demselben Extruder mit allen für die Herstellung der Fertigmischung notwendigen reaktiven Mischungszusätzen versehen und diese in die Grundmischung (g) eingemischt und mit dieser homogenisiert werden, wobei die Mischung ständig durch Kühlung auf dem die Vulkanisierung verhindernden Temperaturniveau gehalten wird.

2. Vorrichtung zur Durchführung des Verfahrens gemäß Anspruch 1, bestehend aus einem Doppelschneckenextruder, der über dichtkämmende und gleich oder gegenläufig um ihre Längsachse antreibbaren Extruderschnecken (2) verfügt, wobei sein eine Einfüllöffnung (5, 16) und Einspeiseöffnungen (22, 23, 25) aufweisendes Gehäuse (1) entlang seiner Verfahrenszonen (B) zur Herstellung der Kutschukfertigmischung eine Kühlvorrichtung aufweist,

**dadurch gekennzeichnet,**

daß das Gehäuse (1) der Mischvorrichtung Entgasungsöffnungen (24, 26) aufweist, daß die Abstände der Einspeise- und Entgasungsöffnungen (22 bis 26) von der Einfüllöffnung (5, 16) für den Rohkautschuk von dem einzufüllenden oder abzuführenden Stoff, der jeweiligen Stoffmenge, der Schneckendrehzahl, dem Extrudatdurchsatz pro Zeiteinheit und von der Viskosität des Rohkautschuks (a) abhängen, und

daß der Abstand der Einfüll-, Einspeise- bzw. Entgasungsöffnungen (5, 6, 16, 22 bis 26) untereinander 0,5 bis 10 Schneckendurchmesser beträgt.

3. Vorrichtung gemäß Anspruch 2,

**dadurch gekennzeichnet,**

daß die Gesamtlänge des Extruders bis zu 60 Schneckendurchmesser beträgt, wobei die Länge der Hauptverfahrenszone (A) für die Gundmischung (g) und die Hauptverfahrenszone (B) für die Fertigmischung in Abhängigkeit von den Mischungsbestandteilen in Bezug auf die Gesamtlänge des Extruders ein Verhältnis von 70 % zu 30 % oder 30 % zu 70 % bilden, vorzugsweise aber ein Verhältnis von 50 % zu 50 % gewählt wird.

4. Vorrichtung gemaß den Ansprüchen 2 und 3,

**dadurch gekennzeichnet,**

daß die Grundmischung in einem ersten Doppelschneckenextruder (D) herstellbar ist, der kontinuierlich einen zweiten kühlbaren Doppelschneckenextruder (E) für die Fertigmischung speist.

5. Vorrichtung gemäß den Ansprüchen 2 bis 4,

**dadurch gekennzeichnet,**

daß der Extruder über zwei Schneckenpaare (12, 13) verfügt, die von getrennten Antriebsvorrichtungen (7, 8) angetrieben in einem gemeinsamen Gehäuse (9, 10) horizontal hintereinander angeordnet sind, wobei das erste Schneckenpaar (12) zur Mischung der Kautschukgrundmischung (g) dient und einen Schneckendurchmesser $d_1$ aufweist, während das zweite Schneckenpaar (13) zur Übernahme und Fertigmischung der Grundmischung (g) bestimmt ist, wobei der Durchmesser $d_2$ dieser Schnecken (13) größer ist als $d_1$.

6. Vorrichtung gemäß Anspruch 2,

**dadurch gekennzeichnet,**

daß die Kühlvorrichtung mit wenigstens einem flüssigen Kühlmedium betrieben wird.

7. Vorrichtung gemäß Anspruch 6,

**dadurch gekennzeichnet,**

daß das Kühlmedium durch Bohrungen (11) im Gehäuse (9, 10) der Mischvorrichtung leitbar ist.

8. Vorrichtung gemäß Anspruch 7,

**dadurch gekennzeichnet,**

daß das Kühlmedium durch auf der Oberfläche des Gehäuses (1, 10) des Extruders herum angeordneten Strömungskanälen leitbar ist.

9. Verwendung eines Doppelschneckenextruders mit in seinem Gehäuse angeordneten, um ihre Längsachsen antreibbaren und miteinander dicht kämmenden Extruderschnecken, bei dem das Extrudergehäuse über Einfüll- und Entgasungsöffnungen verfügt und bei dem zur Kühlung des Extrudates eine flüssigkeitsbetriebene Kühlvorrichtung vorhanden ist, wobei der Doppelschneckenextruder zur kontinuierlichen Herstellung einer Kautschukfertigmischung dient, wobei in einer ersten Extruderzone (A) die Herstellung der Kautschukgrundmischung (g) durch Einfüllen von Rohkautschuk (a) sowie aller nichtreaktiven Mischungszusätze und deren Einmischung und Homogenisierung erfolgt und bei der in einer zweiten Extruderzone (B) in die Grundmischung (g) unter intensiver Kühlung des Extrudates alle reaktiven Mischungskomponenten in den Extruder eingefüllt, eingemischt und zu einer Kautschukfertigmischung homogenisiert werden, während die Temperatur des Extrudates durch ihre Kühlung ständig unter der Vulkanisationstemperatur des Kautschuks gehalten wird.

**Claims**

1. Process for a single-stage continuous production of a rubber base compound and a finished rubber compound for car tires, driving belts, conveyor belts and industrial rubber products,
   **characterized in that**
   crude rubber (a) is fed into a twin-screw extruder in which it is plasticised and homogenised,
   that the non-reactive compound ingredients required to produce the base compound (g) are subsequently added at predetermined distances along the extruder and mixed and homogenised with the crude rubber (a) at a temperature of 100 °C to 160 °,
   that this base compound (g) is then cooled inside the extruder to a temperature of 100 °C to 120 °C,
   that the base compound (g), the temperature of which is maintained at this level, then has all reactive compound ingredients added to it that are necessary to produce the finished compound and which are mixed and homogenised with the base compound (g) in the said extruder, with the compound being constantly cooled such as to keep the temperature at a level at which no vulcanisation occurs.

2. Apparatus for the execution of the process as per claim 1, consisting of a twin-screw extruder which is equipped with closely intermeshing, co-rotating or counter-rotating extruder screws (2) that can be driven in such as way that they rotate about their longitudinal axes and the housing (1) of which has a feed opening (5, 16) and feed ports (22, 23, 25) and is equipped with a cooling device along its processing zones (B) for the production of the finished rubber compound,
   **characterized in that**
   the housing (1) of the mixing unit has degassing openings (24, 26),
   that the distance at which the feed ports and degassing openings (22 to 26) are arranged from the feed opening (5, 16) for the crude rubber is determined by the material to be fed or discharged, the material quantity, the screw speed, the material throughput per unit of time and by the viscosity of the crude rubber (a) and
   that the distance between the feed opening, feed ports and degassing openings (5, 6, 16, and 22 to 26) is 0.5 to 10 screw diameters.

3. Apparatus as per claim 2,
   **characterized in that**
   the extruder has a maximum total length of 60 screw diameters and that depending on the compound ingredients the main processing zone (A) for the base compound (g) and the main processing zone (B) for the finished compound have a length of 70 % and 30 % or 30 % and 70 % of the total length of the extruder, with a length of 50 % being preferably chosen for each of the zones.

4. Apparatus as per claims 2 and 3,
   **characterized in that**
   the base compound can be produced in a first twin-screw extruder (D) which continuously feeds a second twin-screw extruder (E) for the finished rubber compound, with the second extruder being designed in such a way that the extruder can be cooled.

5. Apparatus as per claims 2 to 4,
   **characterized in that**
   the extruder is equipped with two pairs of screws (12, 13) that are driven by separate drives (7, 8) and arranged on a horizontal line one behind the other in a common housing (9, 10), with the first pair of screws (12), which is characterized by a screw diameter of $d_1$, serving to mix the rubber base compound (g), whereas the second pair of screws (13), to which the base compound is transferred and the screw diameter $d_2$ of which is larger than $d_1$, serving to convert the base compound into the finished compound.

6. Apparatus as per claim 2,
   **characterized in that**
   the cooling unit works with at least one liquid cooling agent.

7. Apparatus as per claim 6,
   **characterized in that**
   the cooling agent can circulate through bores (11) in the housing (9, 10) of the mixing unit.

EP 0 490 056 B1

8. Apparatus as per claim 7,
**characterized in that**
the cooling agent can circulate through flow channels arranged on the surface of the extruder housing (1, 10).

9. Use of a twin-screw extruder equipped with closely intermeshing extruder screws that are arranged inside the extruder housing and can be driven in such a way that they rotate about their longitudinal axes, with the extruder housing having feed and degassing openings, the extruder being equipped with a cooling unit that works with a liquid cooling agent and serves to cool the material, the twin-screw extruder serving to produce a finished rubber compound in a continuous process, with the rubber base compound (g) being produced in the first extruder zone (A) by feeding the crude rubber (a), adding all non-reactive compound ingredients and mixing and homogenising them, and with all reactive compound ingredients being fed into the extruder in the second processing zone (B) and mixed and homogenised with the base compound (g) such as to produce the finished rubber compound while the material is intensively cooled, thus keeping the material temperature below the vulcanisation temperature of the rubber.


**Revendications**


1. Procédé pour la fabrication en continu et à une étape de mélanges de base et fini en caoutchouc pour pneus, courroies de transmission, tapis de transport ainsi que pour articles techniques en caoutchouc,
**caractérisé en ce que**
le caoutchouc brut (a) est introduit dans une extrudeuse double-vis et y est plastifié et homogénéisé,
que les additifs de mélange non-réactifs nécessaires a la production du mélange de base (g) sont introduits ensuite dans des distances présélectionnées le long de l'extrudeuse et mélangés avec le caoutchouc brut (a) à des températures de 100 °C jusqu'à 160 °C et homogénéisés,
que ce mélange de base (g) est ensuite refoidi dans cette extrudeuse à une plage de températures entre 100 °C et 120 °C, que le mélange de base (g) maintenu à cette température est mélangé dans la même extrudeuse avec tous les additifs de mélange réactifs nécessaires à la production du mélange fini et homogénéisé, le mélange étant maintenu constamment à un niveau de température qui permet d'éviter la vulcanisation.

2. Dispositif pour la mise en oeuvre du procédé selon revendication 1 se composant d'une extrudeuse double-vis équipée de vis d'extrudeuse (2) co-rotatives ou contre-rotatives à effet de peigne fin qui sont entraînées autour de leur axe longitudinal, le carter (1) pourvu d'une ouverture d'alimentation (5, 16) et des ouvertures d'introduction (22, 23, 25) étant équipé d'un dispositif de refroidissement le long de ses zones de transformation (B) pour la production du mélange fini en caoutchouc,
**caractérisé en ce que**
le carter (1) du dispositif de mélangeage est équipé d'ouvertures de dégazage (24, 26),
que les distances entre les ouvertures d'alimentation et de dégazage (22 à 26) et l'ouverture d'alimentation (5, 16) pour le caoutchouc brut dépendent de la matière à alimenter ou à évacuer, de la quantité de matière correspondante, de la vitesse de vis, du débit de matière par unité de temps et de la viscosité du caoutchouc brut (a) et
que la distance des ouvertures d'alimentation, d'introduction ou bien de dégazage (5, 6, 16, 22 à 26) entre elles s'élève à 0,5 a 10 diamètres de vis.

3. Dispositif selon revendication 2,
**caractérisé en ce que**
la longueur totale de l'extrudeuse atteint jusqu'à 60 diamètres de vis, la longueur de la zone de transformation principale (A) pour le mélange de base (g) et la zone de transformation principale (B) pour le mélange fini ayant un rapport de 70 % à 30 %, mais de préférence de 50 % à 50 %, sur la longueur totale de l'extrudeuse en fonction des ingrédients de mélange.

4. Dispositif selon les revendications 2 et 3,
**caractérisé en ce que**
le mélange de base est produit dans une première extrudeuse double-vis (D) qui alimente en continu une deuxième extrudeuse double-vis (E) pour le mélange fini qui peut être refroidie.

**5.** Dispositif selon les revendications 2 à 4,
   **caractérisé en ce que**
   l'extrudeuse comprend deux paires de vis (12, 13) qui sont entraînées séparément par des dispositifs d'entraînement (7, 8) et arrangées horizontalement l'une derrière l'autre dans un carter commun (9, 10), la première paire de vis (12) servant au mélangeage du mélange de base en caoutchouc (g) et ayant un diamètre de vis de $d_1$, tandis que la deuxième paire de vis (13) servant à prendre et à effectuer le mélangeage final du mélange de base (g) et ayant un diamètre $d_2$ qui est plus grand que $d_1$.

**6.** Dispositif selon revendication 2,
   **caractérisé en ce que**
   le dispositif de refroidissement est opéré avec au moins un agent de refroidissement liquide.

**7.** Dispositif selon revendication 6,
   **caractérisé en ce que**
   l'agent de refroidissement peut être guidé à travers des alésages (11) se trouvant dans le carter (9, 10) du dispositif de mélangeage.

**8.** Dispositif selon revendication 7,
   **caractérisé en ce que**
   l'agent de refroidissement peut être guidé dans des canaux d'écoulement se trouvant à la surface du carter (1, 10) de l'extrudeuse.

**9.** Utilisation d'une extrudeuse double-vis équipée de vis d'extrudeuse à effet de peigne fin qui sont arrangées dans son carter et peuvent être entraînées autour de leur axe longitudinal, le carter de l'extrudeuse étant pourvu d'ouvertures d'alimentation et de dégazage, le refroidissement de la matière étant effectué par un dispositif de refroidissement à liquide, l'extrudeuse double-vis servant à la production en continu d'un mélange fini en caoutchouc, la première zone d'extrudeuse (A) étant utilisée pour produire le mélange de base en coutchouc (g) par l'introduction de caoutchouc brut (a) ainsi que de tous les additifs de mélange non-réactifs qui sont mélangés et homogénéisés ensuite et la deuxième zone d'extrudeuse (B) étant utilisée pour introduire et mélanger tous les additifs de mélange réactifs avec le mélange de base (g) à un refroidissement intensif de la matière et pour homogénéiser le mélange fini en caoutchouc, tandis que la température de la matière étant constamment maintenue en-dessous de la température de vulcanisation du caoutchouc grâce au refroidissement.

Fig.1

# Fig. 4
## (Z-Z)

# Fig. 2

Fig.3

EP 0 490 056 B1